# EUROPEAN PATENT APPLICATION

(11) **EP 4 303 157 A1**
(43) Date of publication of application: **10.01.2024**
(21) Application number: 22763400.3
(22) Date of filing: 03.03.2022
(51) Int. Cl.: B65G 47/14, A61J 3/00

(54) **DRUG FEEDER**

(30) Priority: 05.03.2021 JP 2021035522
(71) Applicant: Tosho, Inc., Tokyo 144-0033 (JP)
(72) Inventor: OMURA, Yoshihito, Tokyo 1440033 (JP); OHGAYA, Syunji, Tokyo 1440033 (JP)
(74) Representative: Wilson Gunn
(86) International application number: PCT/JP2022/009203
(87) International publication number: WO 2022/186348

(57) **Abstract**

There is provided a medicine feeder capable of reducing or resolving factors of stagnant medicine pieces even when there are few remaining stagnant medicine pieces. A medicine feeder 10 includes an outer rotary body 20, an inner inclined rotary body 30, a lateral width regulation mechanism 70 operable to align solid medicine pieces that have been carried onto an annular upper end surface 23 of the outer rotary body 20 from the top of the inner inclined rotary body 30, and fallen medicine detecting means 56 for detecting a fallen medicine piece discharged after being aligned. A control portion 80 determines that no medicine pieces are contained any more when a non-detection time interval reaches a final prescribed time interval while performing rotation controls. Before stopping discharge operation, vibrating rotation control for rotating the inner inclined rotary body 30 while vibrating the inner inclined rotary body 30 is performed in order to resolve stagnation of remaining medicine pieces. Further before that, the lateral width of a medicine transfer path on the annular upper end surface 23 is increased stepwise by controlling the lateral width regulation mechanism 70 in order to resolve congestion of medicine pieces.

## Description

### TECHNICAL FIELD

The present invention relates to a medicine feeder operable to automatically feed solid medicine pieces such as tablets and ampules in order to automate medicine dispensation performed in hospitals, pharmacies, etc.

### BACKGROUND ART

The present invention relates in particular to a medicine feeder configured to contain a large number of medicine pieces of the same shape in a random manner and align the medicine pieces using rotary bodies in order to consecutively feed and sequentially discharge the medicine pieces one by one.

Patent Documents 1 to 3 disclose medicine feeders according to the related art configured as follows. A medicine feeder according to the related art includes: an outer rotary body including an internal space having an opening portion opening upward and an annular upper end surface surrounding the opening portion, the outer rotary body being rotatable about a virtual vertical line extending in a vertical direction in the internal space; an inner inclined rotary body disposed in the internal space of the outer rotary body, the inner inclined rotary body being rotatable about a virtual inclined line tilted with respect to the vertical line, with a plurality of solid medicine pieces being placed on an upper surface portion of the inner inclined rotary body, and operable to move the plurality of medicine pieces onto the annular upper end surface of the outer rotary body while rotating; an alignment regulation mechanism configured to align the plurality of medicine pieces, which have been moved onto the annular upper end surface of the outer rotary body, in a rotational direction of the annular upper end surface when the outer rotary body is rotating; a control portion configured to perform rotation control of the outer rotary body and rotation control of the inner inclined rotary body; and fallen medicine detecting means for detecting a fallen medicine piece that has been carried to a fall-discharge port by the outer rotary body. The control portion includes a time interval measurement portion configured to measure a non-detection time interval for which no medicine pieces are detected on the basis of an output from the fallen medicine detecting means when the rotation controls are performed, and stops the discharge operation by determining that no medicine pieces are contained any more when the non-detection time interval measured by the time interval measurement portion exceeds a final prescribed time interval determined in advance.

Such a medicine feeder eliminates the need to provide a fixed rectification guide in the rotary bodies, and can be used in common with an extended range of medicine pieces of a variety of shapes and sizes.

Patent Documents 2 and 3 also disclose medicine feeders in which grooves or engravings are formed in the upper surface of an annular upper end surface of an outer rotary body to enhance medicine transfer capability, or in which a regulation mechanism configured to align medicine pieces is provided to align solid medicine pieces, not forcibly, in line on a medicine transfer path on the annular upper end surface of the outer rotary body.

Patent Documents 2 and 3 further disclose that rotation control performed by a controller (control portion) starts with low-speed rotation and transitions to high-speed rotation; the rotational speed is adjusted according to a medicine size estimated on the basis of a medicine detection time length measured when a first fallen medicine piece is detected; the rotational speed is reduced when the number of remaining medicine pieces calculated from a specified total number of medicine pieces to be discharged and a counted number of medicine pieces that have been discharged; reverse rotation (rotation to the retraction side) is performed in order to prevent undesirable fall of excessive medicine pieces after the medicine discharge is completed, etc. In Patent Documents 2 and 3, the empty state of the medicine feeder with all the medicine pieces in the medicine feeder being completely discharged is detected by confirming that the stand-by time for medicine detection by the fallen medicine detecting means (non-detection time interval) exceeds a predetermined time interval (i.e. by confirming a time-out).

### Related-art Document

### Patent Document

Patent Document 1: Japanese Unexamined Patent Application Publication No. 2018-108277 (JPA 2018-108277)
Patent Document 2: Japanese Patent No. 6736074 (JP 6736074)
Patent Document 3: Japanese Patent No. 6736075 (JP 6736075)

### SUMMARY OF INVENTION

### TECHNICAL PROBLEM

When the method of detecting the completion of discharge from the medicine feeder by confirming that the non-detection time interval for medicine pieces exceeds a predetermined time interval is used, there occurs a problem, although on rare occasions, in which medicine pieces are stuck at the regulation mechanism during consecutive discharge of medicine pieces to cause congestion of medicine pieces being transferred, significantly impairing the function to sequentially discharging medicine pieces. When this problem occurs, detection of fallen medicine pieces by the fallen medicine detecting means is interrupted, and it may be erroneously determined that the medicine feeder has been emptied with all the medicine pieces in the medicine feeder being completely discharged. There also occurs a situation in which only one medicine piece remains in the inner inclined rotary body or the outer rotary body, or a situation in which, even if a plurality of medicine pieces remain, only a small number of medicine pieces are left and located away from each other not to affect each other. In such situations, medicine pieces may keep staying on the inner inclined rotary body, or even medicine pieces placed on the annular upper end surface of the outer rotary body may keep staying at a discharge guide, a transfer surface guide at the distal end of the discharge guide, etc., because of attraction due to static electricity, adhesion due to moisture etc., or interaction between object surfaces such as engagement due to minute unevenness etc. on the surfaces.

An object of the present invention is to provide a medicine feeder capable of reducing or resolving factors of stagnant medicine pieces even when there are few remaining medicine pieces.

### SOLUTION TO PROBLEM

A medicine feeder which the present invention aims at improving, includes an outer rotary body, an inner inclined rotary body, an alignment regulation mechanism, a control portion, and fallen medicine detecting means. The outer rotary body includes an internal space having an opening portion opening upward and an annular upper end surface surrounding the opening portion, the outer rotary body being rotatable about a virtual vertical line extending in a vertical direction in the internal space and operable to rotate in a forward direction during discharge operation. The inner inclined rotary body is disposed in the internal space of the outer rotary body, the inner inclined rotary body being rotatable about a virtual inclined line tilted with respect to the virtual vertical line, with a plurality of solid medicine pieces being placed on an upper surface portion of the inner inclined rotary body, and operable to move the plurality of medicine pieces onto the annular upper end surface of the outer rotary body while rotating in a forward direction during the discharge operation. The alignment regulation mechanism is configured to align the plurality of medicine pieces, which have been moved onto the annular upper end surface of the outer rotary body, in a rotational direction of the annular upper end surface when the outer rotary body is rotating in the forward direction. The control portion is configured to perform rotation control of the outer rotary body and rotation control of the inner inclined rotary body. The fallen medicine detecting means detects a fallen medicine piece that has been carried to a fall-discharge port by rotation of the outer rotary body in the forward direction. The control portion includes a time interval measurement portion configured to measure a non-detection time interval for which no medicine pieces are detected on the basis of an output from the fallen medicine detecting means when the rotation controls are performed, and a medicine discharge operation control portion configured to stop the discharge operation by determining that no medicine pieces are contained any more when the non-detection time interval measured by the time interval measurement portion exceeds a final prescribed time interval determined in advance. In the present invention, the medicine discharge operation control portion is configured to perform vibrating rotation control for rotating the inner inclined rotary body while vibrating the inner inclined rotary body before stopping the discharge operation.

In the medicine feeder according to the present invention, if a time-out is about to occur (i.e. the non-detection time interval measured by the time interval measurement portion exceeds a prescribed time interval determined in advance) when rotating the inner inclined rotary body in order to transfer medicine pieces onto the annular upper end surface of the outer rotary body from the top of the inner inclined rotary body, vibration is superimposed on rotation of the inner inclined rotary body. With this configuration, even when the number of medicine pieces on the inner inclined rotary body is reduced and adhesion etc. acting to keep the medicine pieces on the inner inclined rotary body is likely to act, the action is suppressed or resolved by the vibration, avoiding the medicine pieces undesirably remaining on the inner inclined rotary body. The vibration superimposed on the rotation of the inner inclined rotary body includes a vertical vibration component, and is transmitted to the outer rotary body and further transmitted to a support member, a discharge guide, etc., avoiding the medicine pieces undesirably remaining on the annular upper end surface of the outer rotary body. Thus, with the present invention, factors of stagnant medicine pieces can be reduced or resolved so that medicine pieces are discharged before a time-out of detection of discharge of medicine pieces occurs, even when there are few remaining medicine pieces.

Preferably, the vibration is generated in the vibrating rotation control by alternately performing forward operation in which the inner inclined rotary body is rotated in the forward direction and reverse operation in which the inner inclined rotary body is rotated in a reverse direction opposite to the forward direction for a multiple number of times. With this configuration, vibration is generated by executing the vibrating rotation control by repeatedly performing rotation in the forward direction (advancement side) and rotation in the reverse direction (retraction side). Thus, there is advantageously no need to separately prepare a special vibration generation device. For example, the vibrating rotation control can be easily implemented by selecting a rotational drive motor for the inner inclined rotary body that is bi-directionally rotatable, without additionally providing a motor exclusively for applying vibration.

An operation amount of the forward operation and an operation amount of the reverse operation in the vibrating rotation control are minute compared to an operation amount of the forward operation of the inner inclined rotary body performed before the vibrating rotation control is performed.

Fine vibration generated by repeatedly applying minute amounts of operation effectively suppresses the action of adhesion etc. that acts to keep the medicine pieces on the inner inclined rotary body. In this case, the operation amount of the forward operation may be larger than the operation amount of the reverse operation in the vibrating rotation control. Then, vibration can be applied to the inner inclined rotary body while advancing the inner inclined rotary body in the forward direction.

The medicine discharge operation control portion may perform high-speed reverse operation, in which the inner inclined rotary body is rotated in the reverse direction at a speed (high speed) higher than a rotational speed of rotation of the inner inclined rotary body in the forward direction performed during the discharge operation, immediately after execution of the vibrating rotation control. The medicine discharge operation control portion may perform high-speed forward operation, in which the inner inclined rotary body is rotated in the forward direction at a speed higher than the rotational speed of the rotation of the inner inclined rotary body in the forward direction performed during the discharge operation, after the high-speed reverse operation is performed.

With this configuration, in any case, high-speed reverse operation (fast rotation in the reverse direction) and high-speed forward operation (fast rotation in the forward direction) of the inner inclined rotary body are additionally performed soon after adhesion etc. for medicine pieces is suppressed or resolved through the vibrating rotation control. This allows medicine pieces remaining on the inner inclined rotary body to be immediately transferred onto the annular upper end surface of the outer rotary body before undesirable adhesion etc. is recovered. Therefore, the presence of remaining medicine pieces can be adequately avoided without wasting the effect of reducing or resolving factors of stagnant medicine pieces by means of the preceding vibrating rotation control.

Specifically, the medicine discharge operation control portion may be configured to include an outer drive portion that performs the rotation control of the outer rotary body, an inner drive portion that performs the rotation control of the inner inclined rotary body, a determination portion that determines whether or not the non-detection time interval has reached one or more prescribed time intervals determined in advance, and a drive instruction generation portion configured to provide the outer drive portion and the inner drive portion with a drive instruction according to an operation mode selected from a plurality of operation modes determined in advance on the basis of a determination result outputted from the determination portion. The plurality of operation modes include at least an operation mode for performing the vibrating rotation control. The plurality of operation modes may include an operation mode for performing high-speed reverse operation, in which the inner inclined rotary body is rotated in the reverse direction at a speed higher than a rotational speed of rotation of the inner inclined rotary body in the forward direction performed during the discharge operation, immediately after execution of the vibrating rotation control, and performing high-speed forward operation, in which the inner inclined rotary body is rotated in the forward direction at a speed higher than the rotational speed of the rotation of the inner inclined rotary body in the forward direction performed during the discharge operation, after the high-speed reverse operation is performed.

Further, the plurality of operation modes may include an operation mode in which the medicine discharge operation control portion performs reverse operation, in which the inner inclined rotary body is rotated in reverse, when the determination portion determines that the non-detection time interval has reached one or more prescribed time intervals determined in advance before the vibrating rotation control is executed. By adopting a configuration in which a plurality of operation modes can be used, vibrating rotation control suitable for the shape and the mass of medicine pieces can be performed by selecting an operation mode.

The non-detection time interval for medicine pieces carried to the fall-discharge port by the outer rotary body and having fallen is equal to or close to the known non-detection time interval for medicine pieces under normal medicine discharge operation. However, when the non-detection time interval reaches a time interval more or less longer than the known non-detection time interval for medicine pieces, that is, a congestion time interval (non-detection time interval for medicine pieces during congestion of medicine pieces being transferred) under normal medicine discharge operation, there is a high possibility that medicine pieces being transferred are in an undesirable congested state in the medicine transfer path on the annular upper end surface of the outer rotary body. When there occurs a medicine congested state in which a large number of medicine pieces are stuck at the regulation members and make a queue in the transfer direction, such a state is detected as delay in discharge. The medicine piece at the head of the congestion is allowed to easily advance when regulation is mitigated.

Thus, the alignment regulation mechanism may regulate a lateral width of a medicine transfer path formed on the annular upper end surface of the outer rotary body. In this case, the medicine discharge operation control portion may include an increase-decrease instruction generation portion configured to output an increase-decrease instruction to increase and decrease an amount of regulation of the lateral width. Preferably, the increase-decrease instruction generation portion outputs the increase-decrease instruction to gradually increase the lateral width to the alignment regulation mechanism when the non-detection time interval measured by the time interval measurement portion reaches a congestion time interval determined in advance and longer than a non-detection time interval for medicine pieces during normal times before execution of the vibrating rotation control. With this configuration, the alignment regulation mechanism is actuated to increase the lateral width of the medicine transfer path, and thus regulation on the passage of medicine pieces beside the alignment regulation mechanism is temporarily mitigated. As a result, slight motion of the medicine piece at the head mitigates the pushing state (push-and-shove action) of the following medicine pieces to vary the queuing state of the medicine pieces, which helps resolve the medicine congested state. Moreover, by causing the alignment regulation mechanism to slightly additionally operate, the medicine congested state can be conveniently mitigated, and undesirable pushing (push-and-shove action) of the medicine pieces is mitigated. Thus, there is no fear that the medicine pieces are damaged even if the medicine pieces are fragile. With the present invention, it is possible to allow the width regulation function of the alignment regulation mechanism to also help resolve congestion of medicine pieces in such a range that even fragile medicine pieces are not damaged and by a simple method.

The increase-decrease instruction generation portion may output, to the alignment regulation mechanism, the increase-decrease instruction to restore the lateral width to a dimension before being increased when the fallen medicine detecting means detects a fallen medicine piece after the lateral width is increased by driving the alignment regulation mechanism. The increase-decrease instruction generation portion may output the increase-decrease instruction to increase the lateral width stepwise. When the lateral width of the medicine transfer path is loosened, or in other words when the lateral width of the medicine transfer path is increased, stepwise rather than continuously, medicine pieces to be regulated are intermittently moved laterally. As a result, friction among the medicine pieces is suppressed and the pushing state (push-and-shove action) of the medicine pieces is mitigated during movement of the medicine pieces. In addition, the medicine pieces are aligned during intervals between moving operations, and thus the medicine congested state can be resolved not forcibly, and efficiently by suppressing an impact on the medicine pieces.

### BRIEF DESCRIPTION OF DRAWINGS

Fig. 1 illustrates the overall structure of a medicine feeder according to an embodiment of the present invention, in which Fig. 1A is an exterior perspective view and Fig. 1B is a front vertical sectional view.
Fig. 2 illustrates the structure of an inner inclined rotary body of the medicine feeder, in which Fig. 2A is an exterior perspective view of the entirety thereof, Fig. 2B is a sectional view of a body of the inner inclined rotary body, Fig. 2C is a plan view of the body, and Fig. 2D is a front view of the body.
Fig. 3 illustrates the structure of an outer rotary body of the medicine feeder, in which Fig. 3A is a vertical sectional view of the entirety thereof, Fig. 3B is an enlarged view of a part thereof, and Fig. 3C is a vertical sectional view illustrating an inclined state.
Fig. 4A is a plan view of an annular upper end surface of the outer rotary body, and Fig. 4B is an enlarged view of a part thereof.
Fig. 5 illustrates the structure of a sorting mechanism and an alignment regulation mechanism of the medicine feeder, in which Fig. 5A is an exterior perspective view of the sorting mechanism etc. configured to sort medicine pieces and Fig. 5B is an exterior perspective view illustrating a situation in which an obliquely crossing abutment surface of a middle operation portion of the sorting mechanism is sorting medicine pieces.
Fig. 6 illustrates the structure of the alignment regulation mechanism of the medicine feeder and a schematic configuration of a control portion, in which Fig. 6A is a plan view of the alignment regulation mechanism in which a medicine piece is placed in a sample medicine placement site, Fig. 6B is a plan view of a first regulation member, and Fig. 6C is an end surface view thereof.
Fig. 7A is a functional block diagram of the control portion, and Fig. 7B is a functional block diagram of a medicine discharge operation control portion.
Fig. 8 is a flowchart illustrating generally a half part of an algorithm of an operation mode for executing medicine discharge operation control.
Fig. 9 is a flowchart illustrating the rest of the algorithm of the operation mode for executing the medicine discharge operation control.
Fig. 10 illustrates a state immediately after medicine pieces are put into the medicine feeder, in which Fig. 10A is a plan view and Fig. 10B is a front vertical sectional view.
Fig. 11 illustrates the state of operation in which medicine pieces are smoothly aligned and sequentially discharged, in which Fig. 11A is a plan view and Fig. 11B is a front vertical sectional view.
Fig. 12 illustrates the state of operation in which congestion of medicine pieces is caused at a regulation member, in which Fig. 12A is a plan view and Fig. 12B is a front vertical sectional view.
Fig. 13 illustrates the state of operation in which congestion of medicine pieces has been resolved by increasing the width of a medicine transfer path, in which Fig. 13A is a plan view and Fig. 13B is a front vertical sectional view.
Fig. 14 illustrates the state of operation in which there remains only one medicine piece yet to be discharged, in which Fig. 14A is a plan view and Fig. 14B is a front vertical sectional view.

### DESCRIPTION OF EMBODIMENTS

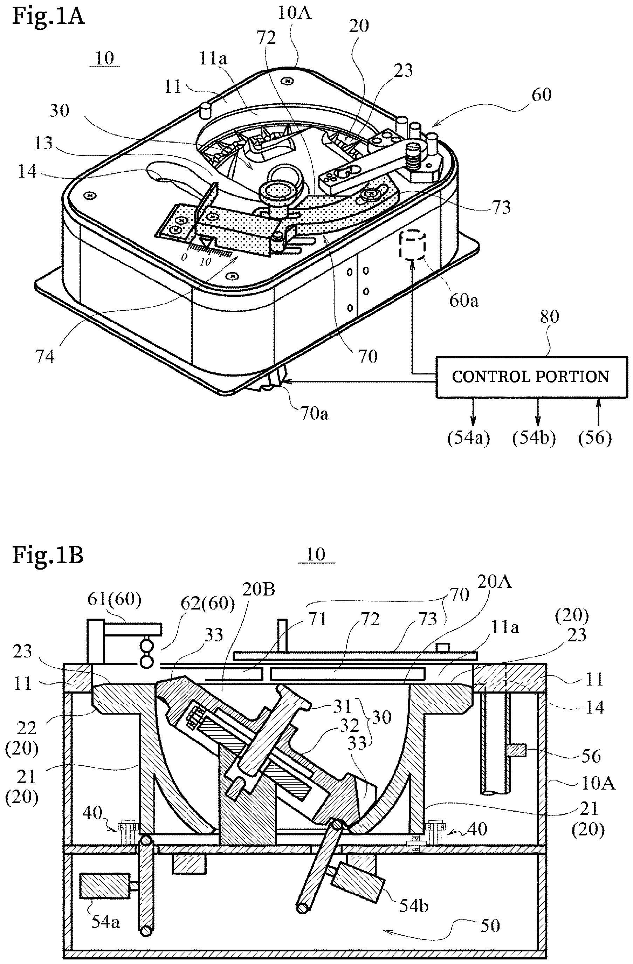

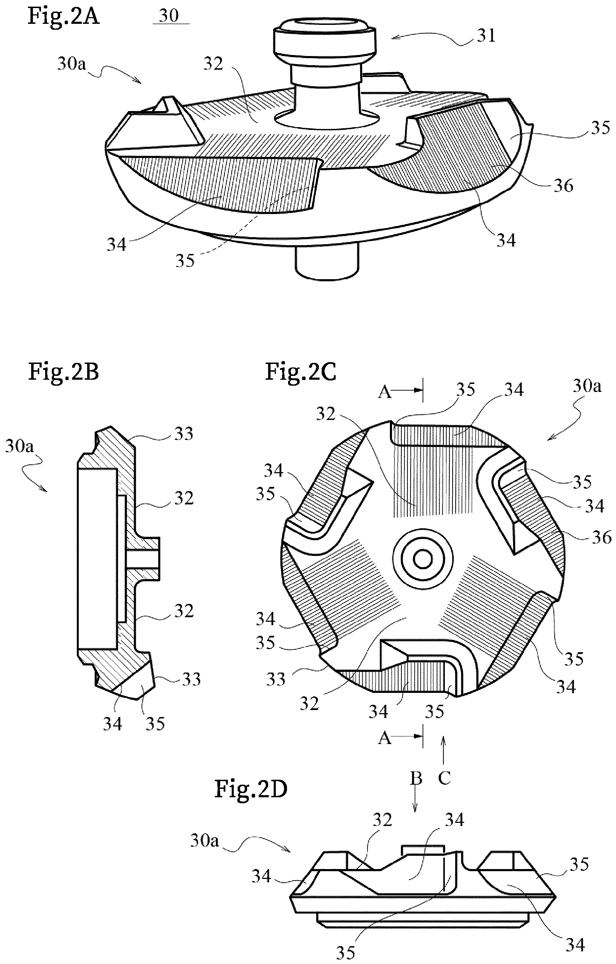

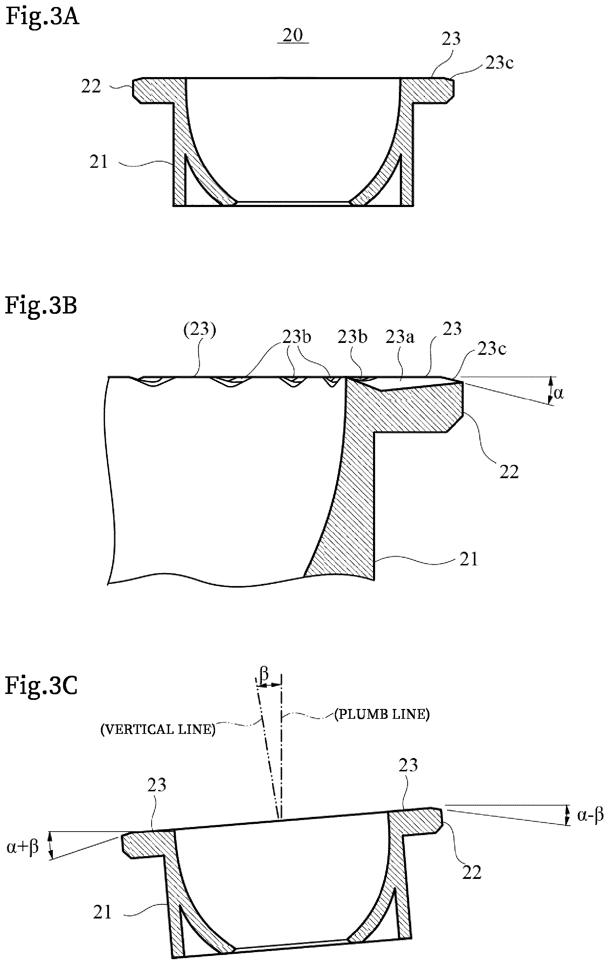

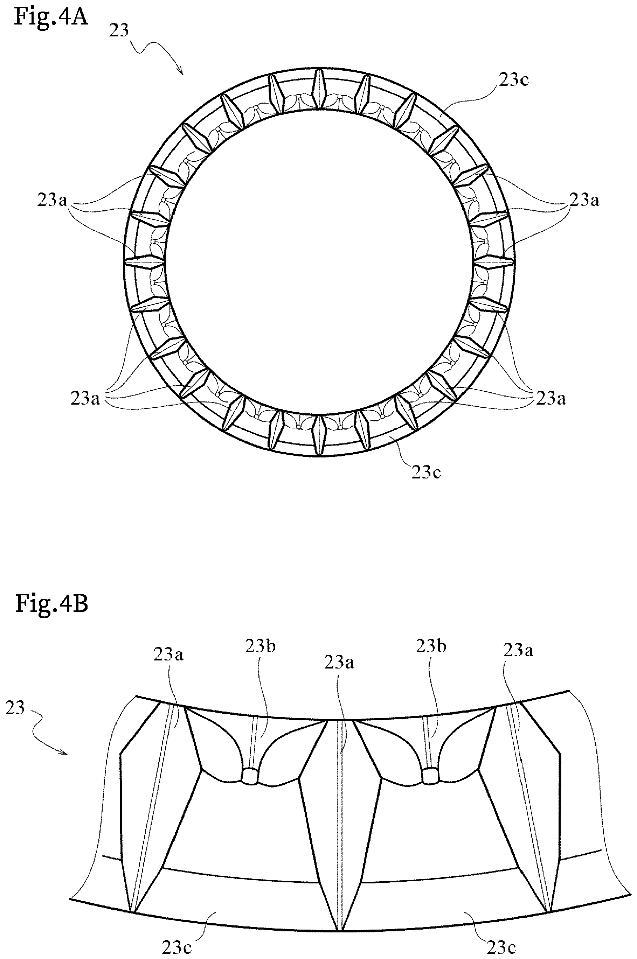

A medicine feeder according to an embodiment of the present invention will be described below with reference to the drawings. Fig. 1 illustrates the overall structure of a medicine feeder 10, in which Fig. 1A is an exterior perspective view and Fig. 1B is a front vertical sectional view. Fig. 2 illustrates the structure of an inner inclined rotary body 30, in which Fig. 2A is an exterior perspective view and Figs. 2B to 2D are a sectional view, a plan view, and a front view, respectively, of a body 30a of the inner inclined rotary body 30. Figs. 3 and 4 illustrate the structure of an outer rotary body 20. Fig. 3A is a vertical sectional view of the entire outer rotary body 20, Fig. 3B is an enlarged view of a part of the outer rotary body 20, and Fig. 3C is also a vertical sectional view of the entire outer rotary body 20. Fig. 4A is a plan view of an annular upper end surface 23 of the outer rotary body 20, and Fig. 4B is an enlarged view of a part thereof.

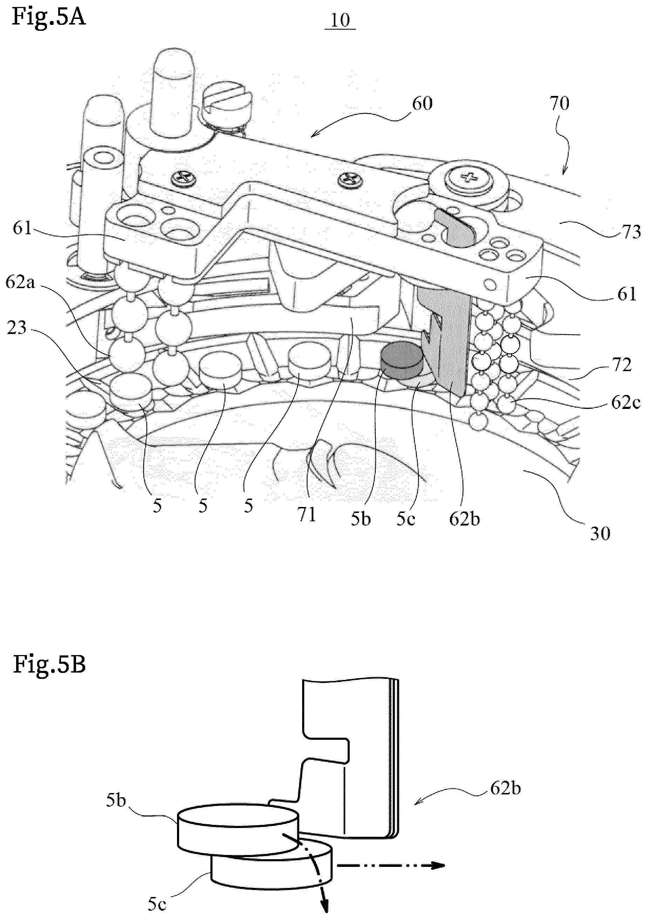

Fig. 5 illustrates the structure of a tablet height regulation mechanism 60 and a lateral width regulation mechanism 70, in which Fig. 5A is an exterior perspective view of the tablet height regulation mechanism 60 etc. configured to sort medicine pieces and Fig. 5B is an exterior perspective view illustrating a situation in which an obliquely crossing abutment surface of a middle operation portion 62b of the tablet height regulation mechanism 60 is sorting medicine pieces.

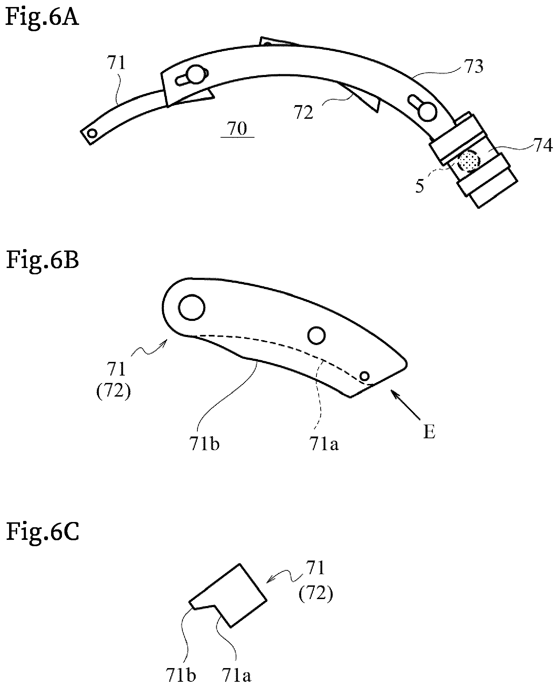

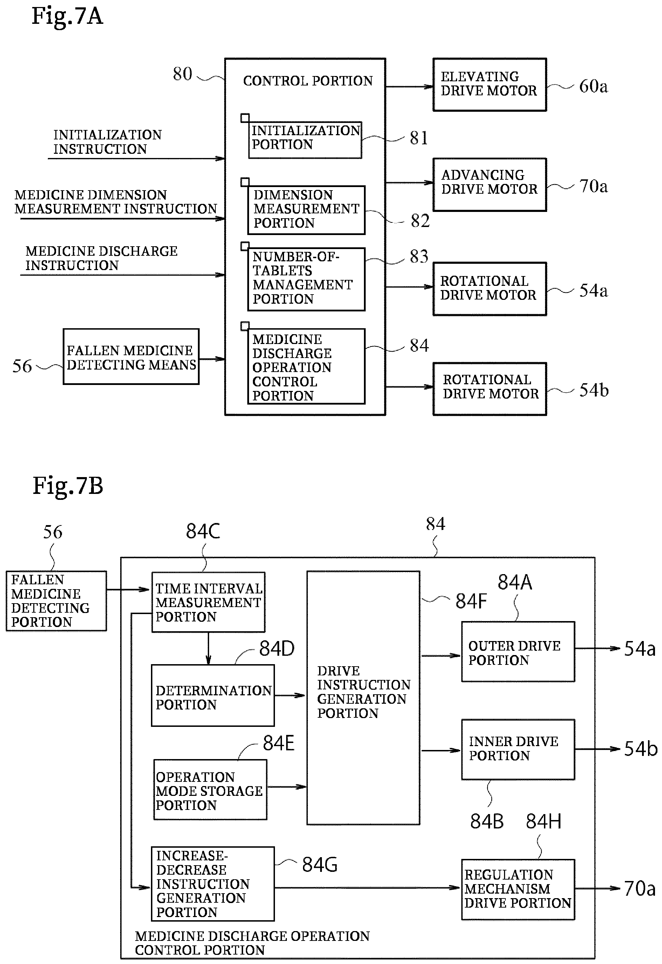

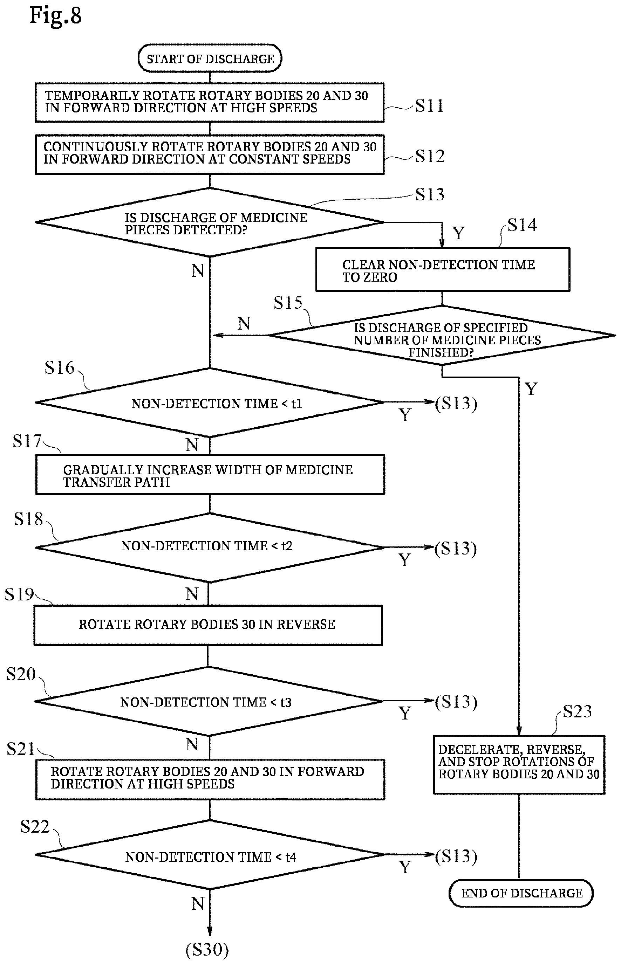

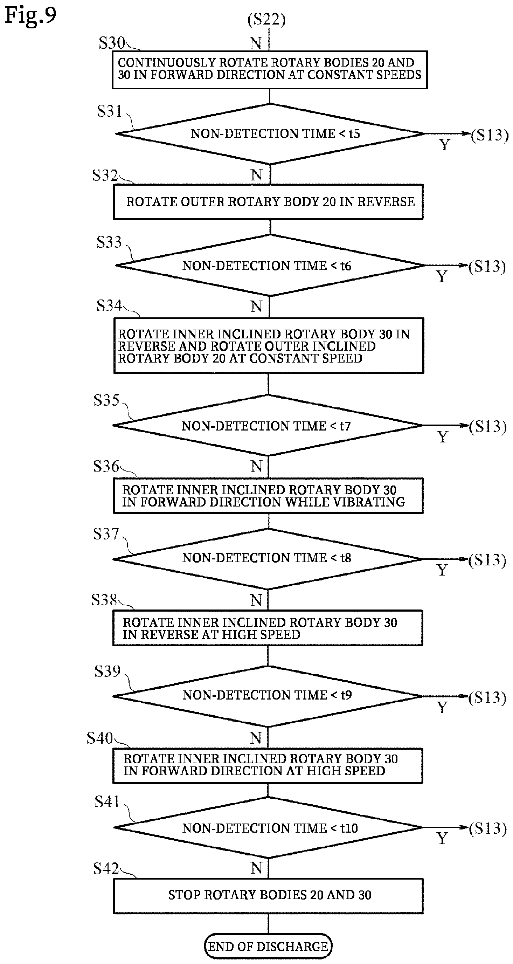

Fig. 6 illustrates the structure of the lateral width regulation mechanism 70, in which Fig. 6A is a plan view schematically illustrating an essential portion of the lateral width regulation mechanism 70, Fig. 6B is a plan view of a first regulation member 71, and Fig. 6C is an end surface view of the first regulation member 71. Fig. 7A is a functional block diagram of a control portion 80, and Fig. 7B is a functional block diagram of a medicine discharge operation control portion 84. Figs. 8 and 9 are each a flowchart illustrating an algorithm of a medicine discharge operation control program installed in the control portion 80.

The medicine feeder 10 (see Fig. 1) is of a double rotation type. The medicine feeder 10 includes a housing 10A, an outer rotary body 20, an inner inclined rotary body 30, a lateral width regulation mechanism 70, a control portion 80, and fallen medicine detecting means 56. The housing 10A has a peripheral wall 11 located at the uppermost portion of the housing 10A and having a void formed by hollowing the center portion of the peripheral wall 11 in a generally circular shape. The outer rotary body 20 is installed with the upper end portion of the outer rotary body 20 being freely fitted in an inner peripheral wall surface 11a of the peripheral wall 11, that is, a wall surface at the inner periphery of the void of the peripheral wall 11. The outer rotary body 20 includes an internal space 20B having an opening portion 20A opening upward and an annular upper end surface 23 surrounding the opening portion 20A, and is rotatable about a virtual vertical line extending in a vertical direction in the internal space 20B. The inner inclined rotary body 30 is disposed in the internal space 20B of the outer rotary body 20, and is rotatable about a virtual inclined line tilted with respect to the vertical line, with a plurality of solid medicine pieces being placed on an upper surface portion of the inner inclined rotary body 30, to move the plurality of medicine pieces onto the annular upper end surface 23 of the outer rotary body 20 while rotating. The housing 10A includes, provided therein, a support mechanism 40 configured to support the outer rotary body 20 so as to be axially rotatable, a rotary drive mechanism 50 operable to drive rotation of the outer rotary body 20, a tablet height regulation mechanism 60 and a lateral width regulation mechanism 70 provided on the upper side of the peripheral wall 11 and having acting portions located inside the inner peripheral wall surface 11a, fallen medicine detecting means 56 such as a photosensor for detecting a fallen medicine piece that has been carried to a fall-discharge port 14 by the outer rotary body 20, and a control portion 80 configured to perform rotation control of the outer rotary body 20 and rotation control of the inner inclined rotary body 30. An alignment regulation mechanism composed of the tablet height regulation mechanism 60 and the lateral width regulation mechanism 70 aligns a plurality of medicine pieces, which have been moved onto the annular upper end surface 23 of the outer rotary body 20, in a rotational direction of the annular upper end surface 23 when the outer rotary body 20 is rotating. The control portion 80 performs rotation control of the outer rotary body 20 and rotation control of the inner inclined rotary body 30.

Before describing these constituent portions in detail, schematic configurations and main functions of main constituent portions will be described first in order to facilitate understanding of the distribution of roles etc. The outer rotary body 20 is supported by the support mechanism 40, and kept in the state of being axially rotatable about a plumb line or a vertical line slightly tilted from the plumb line.

The inner inclined rotary body 30 is mounted inside the outer rotary body 20, and kept in the state of being axially rotatable about an inclined line tilted from the plumb line more significantly than the above vertical line.

The inner inclined rotary body 30 blocks the lower portion of a void in the outer rotary body 20. The rotary bodies 20 and 30 are combined to form a rotary container (20 + 30) opening upward.

Further, the inner inclined rotary body 30 carries solid medicine pieces on the inclined surface while rotating in the forward direction to feed the medicine pieces onto the annular upper end surface 23 of the outer rotary body 20, and the outer rotary body 20 transfers the medicine pieces toward the fall-discharge port 14 through circulatory motion of the annular upper end surface 23 while rotating in the forward direction (during rotation to the advancement side).

The tablet height regulation mechanism 60 softly abuts against the medicine pieces that have been carried through circulatory rotation of the annular upper end surface 23 of the outer rotary body 20 in the forward direction to resolve stacking of the medicine pieces and disentangle a block of the medicine pieces in a natural and moderate range.

The lateral width regulation mechanism 70 aligns the medicine pieces that have been carried through circulatory rotation of the annular upper end surface 23 of the outer rotary body 20 into one level vertically and one line horizontally.

The rotational drive mechanism 50 includes a rotational drive motor 54a operable to rotate the inner inclined rotary body 30 and a rotational drive motor 54b operable to rotate the outer rotary body 20, which can be independently driven to individually rotate the outer rotary body 20 and the inner inclined rotary body 30. The motors 54a and 54b may be stepping motors, for example, which operate in synchronization and cooperation with each other under control by the control portion 80.

As illustrated in Fig. 7A, the control portion 80 (controller) includes a programmable microprocessor as a main component, and receives an output from the fallen medicine detecting means 56, controls the rotational drive motors 54a and 54b of the rotational drive mechanism 50, and controls an elevating drive motor 60a of the tablet height regulation mechanism 60 and an advancing drive motor 70a of the lateral width regulation mechanism 70. The control portion 80 will be described in detail later.

Next, the various constituent portions will be specifically described.

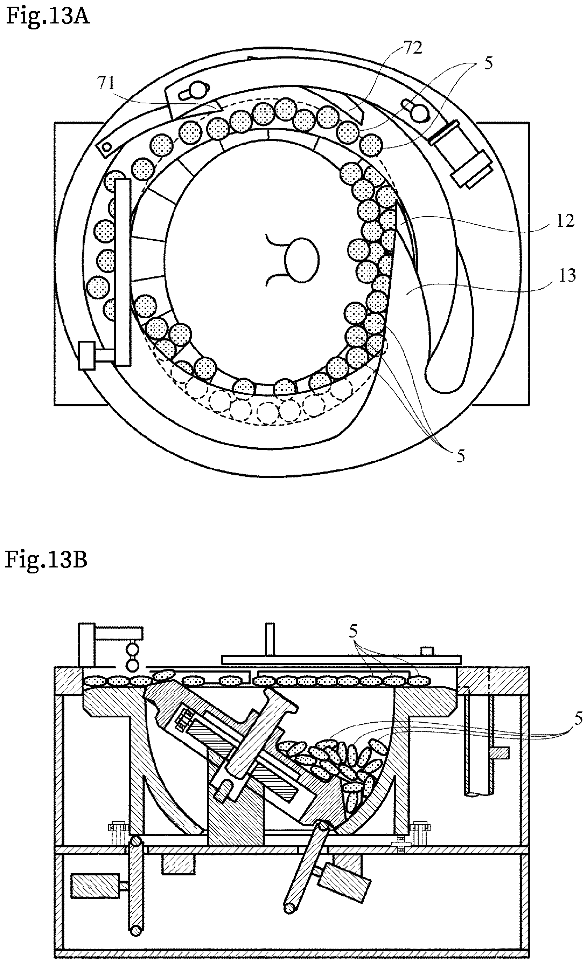

First, the peripheral wall 11 (see Figs. 1 and 13 and Patent Documents 2 and 3) includes a fall-discharge port 14 formed at the distal end of an oblique extension from the void at the center discussed above and the inner peripheral wall surface 11a toward the outer peripheral side to vertically penetrate the peripheral wall 11, and fallen medicine detecting means 56 provided to face a medicine fall path extending downward from the fall-discharge port 14. In addition (see Fig. 13), a discharge guide 13 is formed in the void of the peripheral wall 11 to obliquely project toward the center in order to feed medicine pieces on the annular upper end surface 23 of the outer rotary body 20 to the fall-discharge port 14 through rotation of the outer rotary body 20. Further, a transfer surface guide 12 is formed at the distal end portion of the discharge guide 13 to extend downward and forward therefrom to constitute the foremost end. The transfer surface guide 12 prevents medicine pieces from undesirably falling toward the inner inclined rotary body 30 due to the reaction of abutment against the discharge guide 13.

The inner inclined rotary body 30 (see Fig. 2 and Patent Documents 2 to 5) includes a generally disk-shaped body 30a as a main component. An axial portion 31 is inserted into the center portion of the body 30a to vertically project. The body 30a is generally flat on the upper surface of a center portion 32. Delivery portions 34 and push-up portions 35 are formed at a peripheral edge portion 33 alternately in the circumferential direction so that medicine pieces can be efficiently pushed up and delivered to the outer rotary body 20 even at low speeds. The delivery portions 34 illustrated in the drawing are outwardly falling notches formed by locally chamfering the body 30a and that are larger than the medicine pieces. The push-up portions 35 are rising portions located on the rear end side, of both ends in the circumferential direction, of the delivery portions 34. In addition, uneven parallel wavy portions 36 are formed at various locations of the body 30a by engraving a large number of thin, shallow, and straight grooves extending in the radial direction.

The outer rotary body 20 (see Fig. 3 and Patent Documents 2 to 5) has an overall shape that is similar to a bottomless cup. The outer rotary body 20 is composed of a tubular lower portion 21 and a flange-like upper portion 22. The diameter of a hollow portion at the inner peripheral portion of the outer rotary body 20 is largest at the uppermost position where the annular upper end surface 23 is located, and becomes smaller toward the lower side. Therefore, the inner inclined rotary body 30 can be freely put into and extracted from the hollow portion of the outer rotary body 20, facilitating assembly and part replacement.

A large number of grooves 23a and engravings 23b are provided in the upper surface (medicine transfer path) of the annular upper end surface 23 at the upper portion 22 of the outer rotary body 20 (see Figs. 3 and 4) at equal pitches in the circumferential direction, in order to prevent and suppress rolling of medicine pieces that are easily rollable. A chamfering 23c at an inclination angle α is formed over the circumference at the outer peripheral portion of the annular upper end surface 23.

As illustrated in Fig. 3C, further, a vertical line (dash-double-dot line in the drawing) corresponding to the rotation center axis of the upper portion 22 and hence the outer rotary body 20 is tilted by an angle β with respect to a plumb line (dot and dash line in the drawing). The inclination angle β is approximately 3.5°, for example, and smaller than the inclination angle α of the chamfering 23c of the annular upper end surface 23 discussed above in order not to impair the medicine transfer function, although the inclination angle β is illustrated as exaggerated in the drawing. Therefore, the portion of the chamfering 23c of the annular upper end surface 23 is always kept sloping downward toward the outer peripheral side, even if the tilt of the chamfering 23c of the annular upper end surface 23 with respect to the horizontal is varied between the maximum inclination (α + β) at a lowered position (on the left side in the drawing) and the minimum inclination (α - β) at an elevated position (on the right side in the drawing) along with rotation of the annular upper end surface 23. The inclination of the rotation center axis of the outer rotary body 20 is several times larger than the inclination of the rotation center axis of the inner inclined rotary body 30 discussed above.

The tablet height regulation mechanism 60 (Figs. 1 and 5) includes a support portion 61 with two long and short arm portions extending laterally, and three types of vertically long sorting members, the upper end portions of which are held by the support portion 61 and the lower ends of which are located above the annular upper end surface 23 of the outer rotary body 20 to serve as acting portions 62a, 62b, and 62c. The tablet height regulation mechanism 60 can increase and reduce the vertical clearance between the lower ends of the acting portions 62a, 62b, and 62c of the three types of sorting members and the medicine transfer path on the annular upper end surface 23 of the outer rotary body 20 by the elevating drive motor 60a elevating and lowering the support portion 61 according to control by the control portion 80.

In the example illustrated in Fig. 5, the acting portion s (62a) which are suspended from the shorter arm portion of the support portion 61 to first act on the medicine pieces on the medicine transfer path are each formed from members such as a ball chain composed of plurality of comparatively small spherical bodies strung in series. The acting portions (62c) which are suspended from the distal end portion of the longer arm portion of the support portion 61 to finally act on the medicine pieces on the medicine transfer path are formed from members in which comparatively large spherical bodies are strung in series. The acting portion (62b) which is suspended from a portion of the longer arm portion of the support portion 61 slightly closer to the root from the distal end portion is formed from a plate-like body, the upper end of which is loosely fitted to be loosely held. The acting portions act on abutting medicine pieces with the free lower end portions moving away, and thus disentangle stacked medicine pieces in a range in which an impact is not applied to the medicine pieces.

The lateral width regulation mechanism 70 (see Figs. 1, 5A, and 6A) includes a first regulation member 71, a second regulation member 72, and a link mechanism 73 with a rear swing end portion being located directly above the medicine transfer path on the annular upper end surface 23 of the outer rotary body 20 to reduce the width of the medicine transfer path from the outer peripheral side. The lateral width regulation mechanism 70 includes a link mechanism 73 configured to couple the first regulation member 71 and the second regulation member 72 via a pin-like rotation allowing shaft member, and a sample medicine placement site 74 at which a sample medicine piece 5 may be accommodated.

The swing end portion of the first regulation member 71 is located between the acting portions 62a and 62b of the tablet height regulation mechanism 60, and the swing end portion of the second regulation member 72 is located in rear of the acting portions 62c of the tablet height regulation mechanism 60, that is, closer to the fall-discharge port 14. The first and second regulation members 71 and 72 are swung at the same time and in the same manner according to the advancement and retraction of the link mechanism 73 in the longitudinal direction, and thus the first and second regulation members 71 and 72 increase and reduce the width of the medicine transfer path in conjunction with each other.

When the medicine piece 5 is placed at the sample medicine placement site 74, medicine dimension measurement in which dimensions such as length, width, and thickness of the medicine piece 5 are measured can be performed. When the medicine piece is not placed at the sample medicine placement site 74, the width of the medicine transfer path can be increased and reduced by swinging the end portions of the first and second regulation members 71 and 72 by pushing and pulling one end of the link mechanism 73 freely without being restrained by the medicine piece.

Medicine dimension measurement is performed by the control portion 80 acquiring the distance of advancement made when the medicine piece is clamped at a portion to be measured when the advancing drive motor 70a advances and retracts a movable member (medicine clamping member) at the sample medicine placement site 74 according to control by the control portion 80.

When the advancing drive motor 70a advances and retracts the movable member at the sample medicine placement site 74, the link mechanism 73 is accordingly advanced and retracted to further swing the first regulation members 71, 72.

The first regulation member 71 (Fig. 6B) will be described, as the first and second regulation members 71 and 72 are of the same shape. In the first regulation member 71, the swing center portion at the left end in the drawing is located on the peripheral wall 11 side, and the swing end portion at the right end in the drawing is located over the annular upper end surface 23 of the outer rotary body 20. A lower portion 71a configured to perform a lateral width regulation function and an upper portion 71b that overhangs toward the inner peripheral side with respect to the lower portion 71a are formed on the inner peripheral surface portion of the first regulation member 71, with an inclined surface being formed between the lower portion 71a and the upper portion 71b. Therefore, in the first regulation member 71, the upper portion 71b performs height regulation to reliably disentangle stacked medicine pieces, in addition to the strict lateral width regulation function performed by the lower portion 71a according to the advancement and retraction of the link mechanism 73. The second regulation member 72 is configured in the same manner.

### [Control Portion]

The control portion 80 (see Figs. 1A, 7A, and 7B and Patent Documents 2 and 3) includes an initialization portion 81, a dimension measurement portion 82, a number-of-tablets management portion 83, and a medicine discharge operation control portion 84. When the initialization portion 81 receives an initialization instruction through a manual operation, a control signal, etc., the initialization portion 81 performs initialization to clear various data values such as data on the number of discharged medicine pieces, and set the motors (54a, 54b, 60a, 70a) to the initial state. When the dimension measurement portion 82 receives a medicine dimension measurement instruction, the dimension measurement portion 82 drives the advancing drive motor 70a to measure the width and the thickness of the medicine piece 5 at the sample medicine placement site 74, acquires and holds data, and further transfers the data to an upper-level device.

When the medicine discharge operation control portion 84 receives a medicine discharge instruction, the medicine discharge operation control portion 84 controls drive of the lateral width regulation mechanism 70 by driving the elevating drive motor 60a and the advancing drive motor 70a on the basis of dimension data including width data and thickness data on the target medicine pieces immediately if the medicine discharge operation control portion 84 holds such dimension data. If the medicine discharge operation control portion 84 does not hold dimension data, the medicine discharge operation control portion 84 acquires dimension data on the width and the thickness of the target medicine pieces through a dimension measurement process by the dimension measurement portion 82 or data download, and thereafter controls drive of the lateral width regulation mechanism 70 by driving the elevating drive motor 60a and the advancing drive motor 70a on the basis of the dimension data. Then, the regulation amounts such as the height from the medicine transfer path to the acting portions (62a, 62b, 62c) of the tablet height regulation mechanism 60 and the lateral width of the medicine transfer path reduced by the distal end of the regulation members (71, 72) of the lateral width regulation mechanism 70 are adapted to the target medicine pieces.

After that, the number-of-tablets management portion 83 of the control portion 80 obtains the counted number of discharged medicine pieces by monitoring an output from the fallen medicine detecting means 56 to grasp discharge of each medicine piece and counting up the number of fallen medicine pieces while performing medicine discharge operation control by rotating the rotational drive motor 54a and the rotational drive motor 54b.

In addition, the number-of-tablets management portion 83 manages the number of medicine pieces by stopping the medicine discharge operation control when the acquired counted number of discharged medicine pieces reaches a specified number (a specified prescribed amount such as an amount prescribed for a patient).

The medicine discharge operation control portion 84 is constituted as the functional blocks illustrated in Fig. 7B. Specifically, the medicine discharge operation control portion 84 includes an outer drive portion 84A that performs rotation control of the outer rotary body 20 and an inner drive portion 84B that performs rotation control of the inner inclined rotary body 30. The medicine discharge operation control portion 84 also includes a time interval measurement portion 84C configured to measure a non-detection time interval (a time interval since a first medicine piece, of two medicine pieces that consecutively fall, is detected until the next medicine piece is detected) for which no fallen medicine pieces are detected on the basis of an output from the fallen medicine detecting means 56. The medicine discharge operation control portion 84 further includes a determination portion 84D configured to determine whether or not the non-detection time interval measured by the time interval measurement portion 84C has reached one or more prescribed time intervals determined in advance, and a drive instruction generation portion 84F configured to provide the outer drive portion 84A and the inner drive portion 84B with a drive instruction according to an operation mode selected from a plurality of operation modes determined in advance on the basis of a determination result outputted from the determination portion 84D. The plurality of operation modes are stored in an operation mode storage portion 84E, and include at least an operation mode for performing vibrating rotation control as will be discussed later.

In the operation mode for performing the vibrating rotation control, vibration is generated by alternately performing forward operation in which the inner inclined rotary body 30 is rotated in the forward direction and reverse operation in which the inner inclined rotary body 30 is rotated in a reverse direction opposite to the forward direction a multiple number of times. Specifically, an operation amount of the forward operation and an operation amount of the reverse operation are minute compared to an operation amount of the forward operation of the inner inclined rotary body 30 performed before the vibrating rotation control is performed. In the present embodiment, the operation amount of the forward operation is larger than the operation amount of the reverse operation in the vibrating rotation control. With this configuration, vibration generated by the minute amounts of operation effectively suppresses the action of adhesion etc. that acts to keep the medicine pieces on the inner inclined rotary body 30. When the operation amount of the forward operation is larger than the operation amount of the reverse operation in the vibrating rotation control, vibration can be applied to the inner inclined rotary body 30 while advancing the inner inclined rotary body 30 in the forward direction.

The plurality of operation modes also include an operation mode for performing high-speed reverse operation, in which the inner inclined rotary body 30 is rotated in the reverse direction at a speed higher than a rotational speed of rotation of the inner inclined rotary body 30 in the forward direction performed during the discharge operation, immediately after execution of the vibrating rotation control, and performing high-speed forward operation, in which the inner inclined rotary body 30 is rotated in the forward direction at a speed higher than the rotational speed of the rotation of the inner inclined rotary body 30 in the forward direction performed during the discharge operation, after the high-speed reverse operation is performed, for example.

The plurality of operation modes further include an operation mode for performing reverse rotation control, in which the inner inclined rotary body 30 is rotated in reverse, when the determination portion 84D determines that the non-detection time interval has reached one or more prescribed time intervals determined in advance before the vibrating rotation control is executed. When a plurality of operation modes can be adopted in this manner, appropriate rotation control suitable for the shape and the mass of the medicine pieces can be performed by selecting an operation mode.

The medicine detection time interval for medicine pieces carried to the fall-discharge port by the outer rotary body 20 and having fallen is equal to or close to the known non-detection time interval (non-detection time interval during normal times) under normal medicine discharge operation. When the medicine detection time interval reaches a time interval more or less longer than the normal time interval, that is, a congestion time interval (time interval during congestion of medicine pieces being transferred), there is a high possibility of the occurrence of undesirable congestion of medicine pieces being transferred in the medicine transfer path on the annular upper end surface 23 of the outer rotary body 20. When there occurs a medicine congested state in which a large number of medicine pieces are stuck at the regulation members 71 and 72 of the lateral width regulation mechanism 70 and make a queue in the transfer direction, such a state is detected as delay in discharge, and the medicine piece at the head of the congestion is allowed to easily advance when regulation is mitigated.

Thus, in the present embodiment, the lateral width regulation mechanism 70 regulates the lateral width of the medicine transfer path formed on the annular upper end surface 23 of the outer rotary body 20. The medicine discharge operation control portion 84 includes an increase-decrease instruction generation portion 84G configured to output an increase-decrease instruction to increase and decrease an amount of regulation of the lateral width. The increase-decrease instruction generation portion 84G outputs the increase-decrease instruction to gradually increase the lateral width to an alignment regulation mechanism 84H when the non-detection time interval measured by the time interval measurement portion 84D reaches a congestion time interval determined in advance and longer than a normal time interval before execution of the vibrating rotation control. With this configuration, the advancing drive motor 70a of the lateral width regulation mechanism 70 is actuated to increase the lateral width of the medicine transfer path, and regulation on the passage of medicine pieces beside the lateral width regulation mechanism 70 is temporarily mitigated. As a result, slight motion of the medicine piece at the head mitigates the pushing state of the following medicine pieces to vary the queuing state of the medicine pieces, which helps resolve the medicine congested state. Moreover, by causing the lateral width regulation mechanism 70 to slightly additionally operate, the medicine congested state can be conveniently mitigated, and undesirable pushing of the medicine pieces is mitigated. Thus, there is no fear that the medicine pieces are damaged even if the medicine pieces are fragile.

The increase-decrease instruction generation portion 84G outputs, to the regulation mechanism drive portion 84H, the increase-decrease instruction to restore the lateral width to a dimension before being increased when the fallen medicine detecting means 56 detects a fallen medicine piece after the lateral width is increased by driving the regulation mechanism drive portion 84H. The increase-decrease instruction generation portion 84G may be configured to output the increase-decrease instruction to increase the lateral width stepwise. When the lateral width of the medicine transfer path is loosened, or in other words the lateral width of the medicine transfer path is increased, stepwise rather than continuously, medicine pieces to be regulated are intermittently moved laterally. As a result, friction among the medicine pieces is suppressed and the pushing state (push-and-shove action) of the medicine pieces is mitigated during movement of the medicine pieces. In addition, the medicine pieces are aligned during intervals between moving operations, and thus the medicine congested state can be resolved not forcibly, and efficiently by suppressing an impact on the medicine pieces.

### [Flowchart]

An algorithm of an operation mode of a program for executing the medicine discharge operation control will be described below with reference to the flowcharts illustrated in Figs. 8 and 9.

First, in an initial state immediately after medicine pieces are put onto the inner inclined rotary body 30, the outer rotary body 20 and the inner inclined rotary body 30 are rotated in the forward direction (rotated toward the advancement side) at high speeds temporarily for a predetermined time (step S11) in order to immediately feed medicine pieces from the inner inclined rotary body 30 onto the annular upper end surface 23 of the outer rotary body 20, and thereafter the rotary bodies 20 and 30 are continuously rotated in the forward direction at constant speeds (step S12) in order to stabilize transfer of the medicine pieces.

Then, it is checked on the basis of an output from the fallen medicine detecting means 56 whether or not medicine pieces are discharged (step S13). When discharge of medicine pieces is detected (Y in step S13), the number of discharged medicine pieces is counted up, the value of a non-detection time t is cleared to zero (step S14), and it is checked whether or not discharge of a specified number of medicine pieces is finished by the medicine discharge (step S15). When it is found that discharge of the specified number of medicine pieces is finished (Y in step S15), rotations of the rotary bodies 20 and 30 are immediately decelerated, reversed, and then stopped (step S23) in order to prevent discharge of excessive medicine pieces, and the control of discharge of the specified number of medicine pieces is ended.

When discharge of a specified number of medicine pieces has not been completed yet (N in step S15), the lateral width of the medicine transfer path is restored to a width before being increased by controlling the advancing drive motor 70a if the control portion 80 has increased the lateral width of the medicine transfer path by controlling the advancing drive motor 70a, although not illustrated in the flowchart.

While the non-detection time t having elapsed since discharge of the last medicine piece is less than a predetermined time t1 [0 ≤ t < t1] (normal time interval) (Y in step S16), detection of discharge of medicine pieces is repeatedly performed (step S13) while maintaining the present state. While the non-detection time interval t is in a predetermined time interval [t1 ≤ t < t2] (congestion time interval), the lateral width of the medicine transfer path on the annular upper end surface 23 of the outer rotary body 20 is gradually increased (N in step S16, step S17, and Y in step S18) by controlling the advancing drive motor 70a as measures for resolving congestion in consideration of the possibility that congestion of medicine pieces is caused at the regulation members 71 and 72. Consequently, the medicine feeder 10 increases the lateral width of the medicine transfer path by controlling the regulation members 71 and 72 when the medicine detection time interval (non-detection time interval t) from the fallen medicine detecting means 56 reaches the congestion time interval with a set value (predetermined time interval t1) larger than that of the normal time interval.

While the lateral width of the medicine transfer path may be smoothly increased little by little, the lateral width of the medicine transfer path is increased stepwise in expectation of the shaking effect.

While the non-detection time interval t is in a predetermined time interval [t2 ≤ t < t3], the inner inclined rotary body 30 is rotated in reverse (rotated toward the retraction side) (N in step S18, step S19, and Y in step S20) in consideration of the possibility that several medicine pieces are aggregated to form a block on the inner inclined rotary body 30 in expectation of the effect of disentangling the block of medicine pieces. While the non-detection time interval t is in a predetermined time interval [t3 ≤ t < t4], the rotary bodies 20 and 30 are rotated in the forward direction at high speeds (N in step S20, step S21, and Y in step S22) in order to immediately transfer remaining medicine pieces in consideration of the possibility that the medicine pieces left on the inner inclined rotary body 30 have been reduced.

After that (t4 to t10; remaining medicine stagnant time interval), further discharge operation is carefully performed (steps S30 to S40 in Fig. 9) in consideration of the possibility that the few remaining medicine pieces are stagnant because of undesirable adhesion, engagement, etc.

Specifically, while the non-detection time interval t is in a predetermined time interval [t4 ≤ t < t5], the rotary bodies 20 and 30 are continuously rotated in the forward direction at constant speeds (N in step S22, step S30, and Y in step S31).

After that, while the non-detection time interval t is in a predetermined time interval [t5 ≤ t < t6], the outer rotary body 20 is gently rotated in reverse (N in step S31, step S32, and Y in step S33) in consideration of the possibility that medicine pieces stay at the boundary between the annular upper end surface 23 of the outer rotary body 20 and the discharge guide 13 or the transfer surface guide 12 etc. Subsequently, while the non-detection time interval t is in a predetermined time interval [t6 ≤ t < t7], the inner inclined rotary body 30 is gently rotated in reverse (N in step S33, step S34, and Y in step S35).

After that, while the non-detection time t is in a predetermined time interval (prescribed time interval determined in advance) [t7 ≤ t < t8], vibrating rotation operation in which the inner inclined rotary body 30 is gently rotated in the forward direction while vibrating the inner inclined rotary body 30 is performed (N in step S35, step S36, and Y in step S37). In the vibrating rotation operation, the vibration is generated by alternately performing forward operation in which the inner inclined rotary body 30 is rotated in the forward direction and reverse operation in which the inner inclined rotary body 30 is rotated in the reverse direction opposite to the forward direction a multiple number of times when the control portion 80 performs rotation control of the rotational drive motor 54b. Specifically, an operation amount of the forward operation and an operation amount of the reverse operation are minute compared to an operation amount of the forward operation of the inner inclined rotary body 30 performed before the vibrating rotation control is performed. With this configuration, vibration generated by repeating minute rotational operation effectively suppresses the action of adhesion etc. that acts to keep the medicine pieces on the inner inclined rotary body 30. In addition, vibration can be applied to the inner inclined rotary body 30 while advancing the inner inclined rotary body 30 in the forward direction by making the operation amount of the forward operation larger than the operation amount of the reverse operation in the vibrating rotation control. With this operation, vibrating rotation operation in which the inner inclined rotary body 30 rotates while vibrating is executed even if no vibration motor etc. is added.

Further after that, while the non-detection time interval t is in a predetermined time interval [t8 ≤ t < t9], shake-out reverse rotation control in which the inner inclined rotary body 30 is rotated in reverse at a high speed is performed (N in step S37, step S38, and Y in step S39) in order to immediately feed medicine pieces that have been made able to move by the effect of the vibration, if any. After that, while the non-detection time interval t is in a predetermined time interval [t9 ≤ t < t10], shake-out forward rotation control in which the inner inclined rotary body 30 is rotated in the forward direction at a high speed is performed (N in step S39, step S40, and Y in step S41). While the operation amount of the shake-out reverse rotation control discussed above is typically about one rotation, the operation amount of the shake-out reverse rotation control may be more or less than that. While it is desirable that the operation amount of the following shake-out forward rotation control should be about several rotations since the shake-out forward rotation control is the final feeding operation, the operation amount of the shake-out forward rotation control may be more or less than that.

Then, when the non-detection time interval t reaches a predetermined time interval (final prescribed time interval) [t10] (N in step S41) without discharge of medicine pieces being detected as a result of the fallen medicine detecting means 56 waiting for detection of medicine pieces while performing the medicine discharge operation control, it is determined that a time-out has occurred and no medicine pieces are contained any more, and the control portion 80 stops rotations of the rotary bodies 20 and 30 (step S42) to end the medicine discharge control.

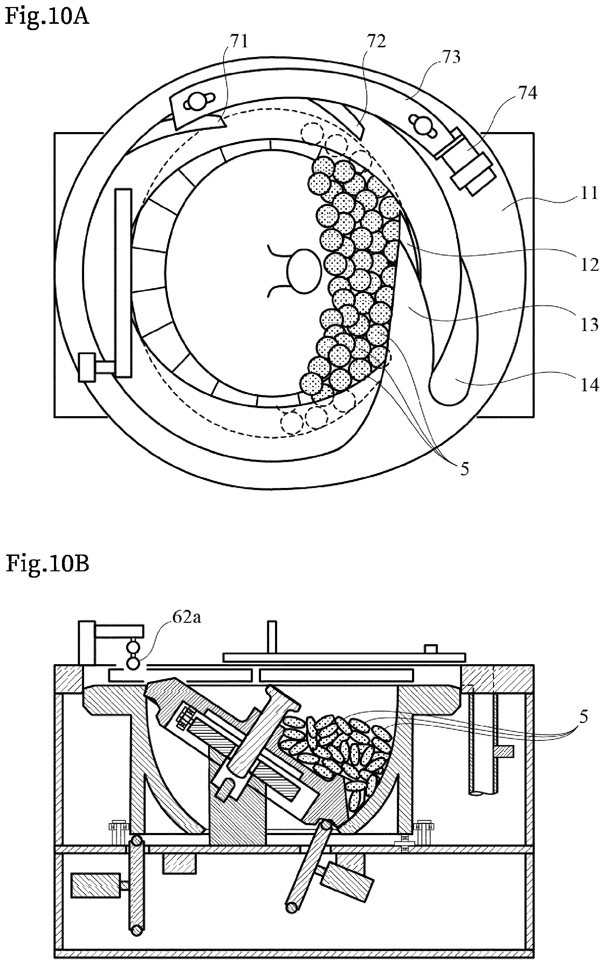

The use and operation of the medicine feeder 10 according to the first embodiment will be described with reference to the drawings. Figs. 10A to 14A are each a plan view, and Figs. 10B to 14B are each a front vertical sectional view.

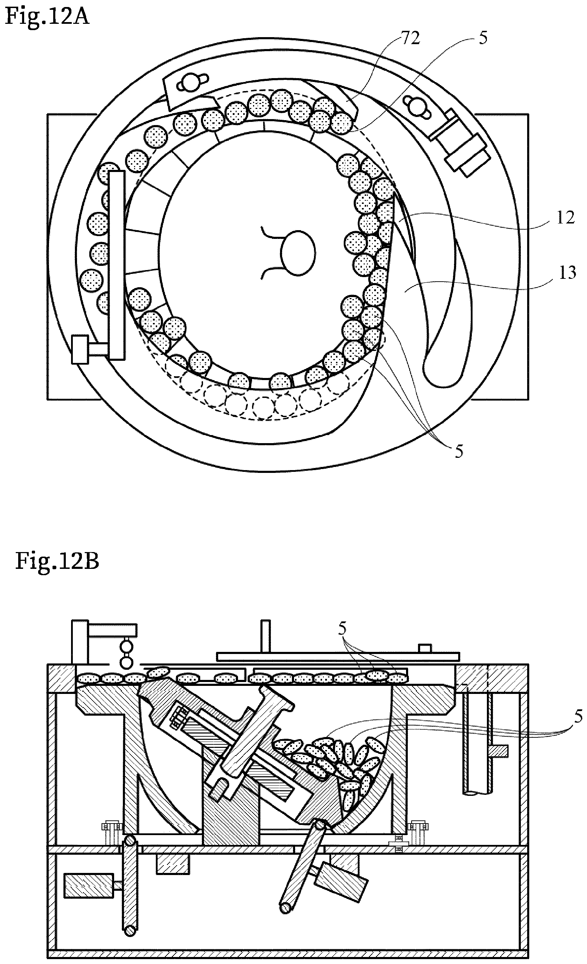

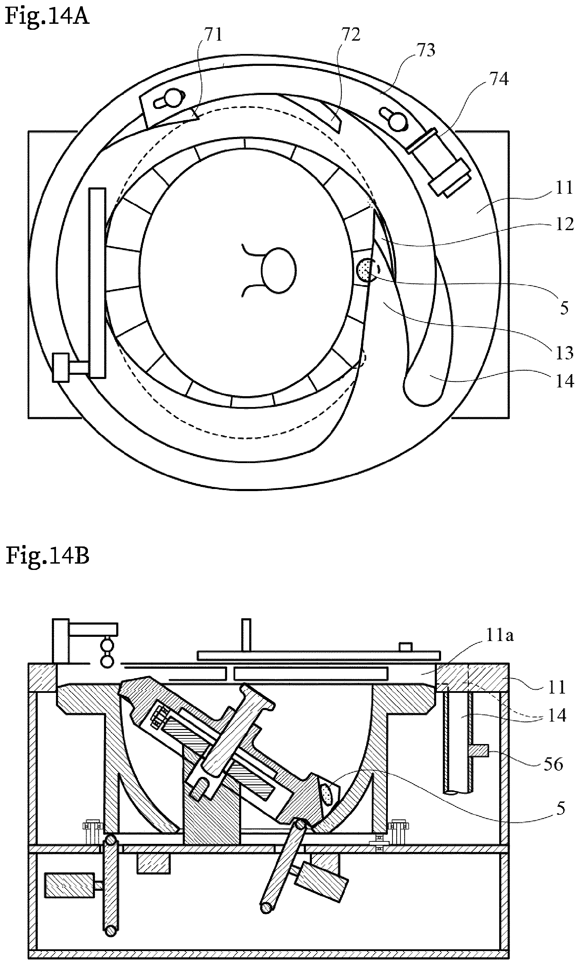

Among the drawings, Fig. 10 illustrates a state immediately after the medicine pieces 5 are put onto the inner inclined rotary body 30, Fig. 12 illustrates the state of operation in which congestion of the medicine pieces 5 is caused at the second regulation member 72, Fig. 13 illustrates the state of operation in which congestion of the medicine pieces 5 has been resolved by the lateral width regulation mechanism 70 increasing the lateral width of the medicine transfer path, and Fig. 14 illustrates the state of operation in which there remains only one medicine piece 5 yet to be discharged.

Before using the medicine feeder 10 for medicine dispensation, it is necessary to cause the control portion 80 to hold at least the width and the thickness among shape data on medicine pieces. Data input or dimension measurement and data setting are performed, although such processes may be omitted if data have been input in advance.

The outer dimensions of the medicine pieces have a relationship defined as [length ≥ width ≥ thickness], which is determined as [length = width = thickness] for true spherical bodies, often determined as [length > width = thickness] for cylindrical bodies and oval spherical bodies, and often determined as [length = width > thickness] for circular plate-like or disk-shaped bodies.

Dimension measurement may be performed using a different device, and data on dimension values may be input to the medicine feeder 10 through a manual operation or download from an upper-level device. When the medicine feeder 10 is caused to operate in a lateral width measurement mode after the medicine piece 5 is set in a horizontal posture at the sample medicine placement site 74 (see Fig. 6A), dimension measurement and data setting for the width of the medicine piece are automatically performed by the control portion 80 driving the advancing drive motor 70a. When the medicine feeder 10 is caused to operate in a thickness measurement mode after the medicine piece 5 is set in a vertical posture at the sample medicine placement site 74, meanwhile, dimension measurement and data setting for the thickness of the medicine piece are similarly automatically performed. After that, the medicine piece 5 can be taken out of the sample medicine placement site 74 and put into the rotary containers (20, 30) to be included in medicine pieces. Thus, the medicine piece 5 will be included in the medicines to be dispensed.

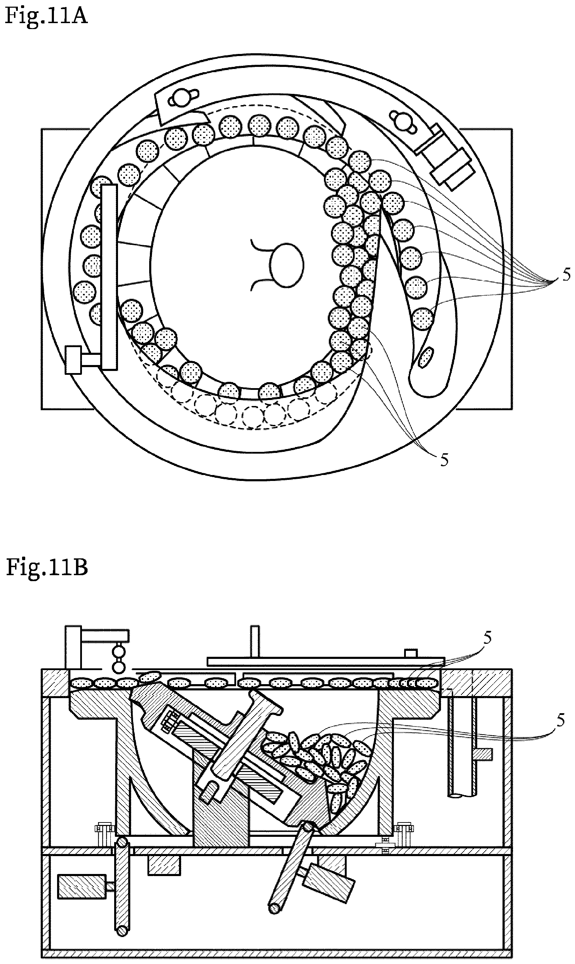

Then, for the tablet height regulation mechanism 60, when the medicine feeder 10 is caused to operate in a preparation mode, the control portion 80 causes the motor 60a to operate on the basis of thickness data on the medicine piece, and accordingly the support portion 61 of the tablet height regulation mechanism 60 is elevated and lowered to thereby adapt the height of the acting portions (62a, 62b, 62c) to the thickness of the medicine piece (see Figs. 5 and 10B). For the lateral width regulation mechanism 70, the control portion 80 causes the motor 70a to operate on the basis of width data on the medicine piece, and accordingly the link mechanism 73 of the lateral width regulation mechanism 70 is moved in the longitudinal direction via the sample medicine placement site 74 to swing the regulation members 71 and 72 to thereby adapt the lateral width at the relevant locations of the medicine transfer path on the annular upper end surface 23 of the outer rotary body 20 to the width of the medicine piece (see Figs. 5A and 11A).

Then, data on the number of medicine pieces specified in a medical prescription and other initial values are set to the control portion 80, and a corresponding number of medicine pieces 5 or more are put into the medicine feeder 10. Specifically, medicine pieces 5 are put onto the inner inclined rotary body 30 surrounded by the outer rotary body 20 (see Fig. 10).

After that, the medicine feeder 10 is caused to operate in an automatic medicine dispensation mode. The rotary bodies 20 and 30 are temporarily rotated in the forward direction at high speeds (see step S11 in Fig. 8), and the medicine pieces are immediately transferred from the inner inclined rotary body 20 to the outer rotary body 30. Then (see step S12 in Fig. 8), when the medicine pieces start to be aligned in the medicine transfer path on the annular upper end surface 23 of the outer rotary body 20, the rotational speeds of the rotary bodies 20 and 30 are reduced to predetermined constant speeds suitable for stable transfer, and the rotary bodies 20 and 30 are continuously rotated in the forward direction.

When the rotary bodies 20 and 30 are continuously rotated in the forward direction at constant speeds, the medicine pieces 5 are lifted by the inner inclined rotary body 30 one after another to be placed onto the annular upper end surface 23 (medicine transfer path) of the outer rotary body 20 (see Fig. 11), and moved to pass under the acting portions (62a, 62b, 62c) of the tablet height regulation mechanism 60 one after another by advancing in the medicine transfer path along with rotation of the outer rotary body 20.

At that time, for medicine pieces 5b and 5c vertically stacked on each other, the upper medicine piece 5b abuts against the acting portions 62a, 62b, 62c at the lower end of the tablet height regulation mechanism 60 (see Fig. 5B), and the stacked medicine pieces are often disentangled by the reaction force. Since the tablet height regulation mechanism 60 moves away when the acting portions are pushed sideways, the stacked medicine pieces may not be disentangled but remain, even if the medicine pieces 5 are not damaged.

As a matter of fact, only a few stacked medicine pieces pass under the tablet height regulation mechanism 60 while being kept stacked. When such medicine pieces are advanced in the medicine transfer path along with rotation of the outer rotary body 20, the upper one of the stacked medicine pieces is pushed by the upper portion 71b of the regulation members 71 and 72 through the subsequent interference with the first regulation member 71 or the second regulation member 72 to fall onto the annular upper end surface 23 of the outer rotary body 20 or the inner inclined rotary body 30 from the top of the lower medicine piece. On the contrary, the lowermost medicine piece is released from the stacked state and brought into a state of not interfering with the upper portion 71b of the regulation members 71 and 72, not even indirectly, and thus passes beside the lower portion 71a to be carried to the fall-discharge port 14 (see Fig. 13).

When discharge of medicine pieces is detected (see Y in step S13 in Fig. 8), the value of the non-detection time interval t is cleared and set to zero (see step S14 in Fig. 8) upon each detection. Although not illustrated, rotations of the outer rotary body 20 and the inner inclined rotary body 30 are restored to rotations in the forward direction at constant speeds, and the lateral width of the medicine transfer path is restored to the original width if it has been increased. Further, the number of discharged medicine pieces is counted up, and it is checked whether or not the number of discharged medicine pieces has reached a specified number (see step S15 in Fig. 8).

When the number of discharged medicine pieces has reached the specified number (see step S23 in Fig. 8), rotations of the outer rotary body 20 and the inner inclined rotary body 30 are immediately decelerated, reversed for a while, and then stopped to end the operation to discharge the specified number of medicine pieces.

On the contrary, when the number of discharged medicine pieces has not reached the specified number yet (see N in step S15 in Fig. 8), the following discharge operation is attempted (see step S16 in Fig. 8 to step S42 in Fig. 9) while waiting for detection of discharge of the next medicine piece (see N in step S13 in Fig. 8).

Specifically, the rotary bodies 20 and 30 are rotated in the forward direction at constant speeds until the non-detection time interval t reaches the time interval t1 (see Y in step S16 in Fig. 8). When medicine pieces are not discharged even if the time t1 elapses (see N in step S16 in Fig. 8), the lateral width of the medicine transfer path is intermittently increased (see step S17 in Fig. 8) by occasionally swinging the regulation members 71 and 72 as countermeasures against a case where congestion of medicine pieces has been caused on the medicine transfer path on the annular upper end surface 23 of the outer rotary body 20. When congestion of medicine pieces has been caused on the medicine transfer path (see Fig. 12), the congestion of medicine pieces is thereby resolved (see Fig. 13).

When the non-detection time t reaches the time t2 with still no medicine pieces being discharged, the inner inclined rotary body 30 is rotated in reverse (see step S19 in Fig. 8) in order to disentangle a block of medicine pieces as countermeasures against medicine pieces being aggregated on the inner inclined rotary body 30.

When the non-detection time interval t reaches the time interval t3 with no medicine pieces being discharged, the rotary bodies 20 and 30 are rotated in the forward direction at high speeds (see step S21 in Fig. 8) as countermeasures against a case where the medicine pieces remaining on the inner inclined rotary body 30 have been reduced.

When the non-detection time interval t reaches the time interval t4 with still no medicine pieces being discharged, further discharge operation is carefully performed (see steps S30 to S40 in Fig. 9) as measures against a case where the few remaining medicine pieces are stagnant because of undesirable adhesion, engagement, etc.

To be discussed in detail, the rotary bodies 20 and 30 are continuously rotated in the forward direction at constant speeds (see step S31 in Fig. 9) while the non-detection time interval t is in the predetermined time interval [t4 ≤ t < t5], and the outer rotary body 20 is gently rotated in reverse (see step S32 in Fig. 9) as countermeasures against a case where medicine pieces stay at the boundary between the annular upper end surface 23 of the outer rotary body 20 and the discharge guide 13 or the transfer surface guide 12 etc. while the non-detection time interval t is in the predetermined time interval [t5 ≤ t < t6].

When the non-detection time interval t reaches the time interval t6 with still no medicine pieces being discharged, the inner inclined rotary body 30 is gently rotated in reverse (see step S34 in Fig. 9), and the outer rotary body 20 is restored to rotation in the forward direction. Then, when the non-detection time interval t is in the predetermined time interval [t7 ≤ t < t8], the outer rotary body 20 is continuously rotated in the forward direction, and the inner inclined rotary body 30 is subjected to vibrating rotation control with vibration. In the vibrating rotation control, the vibration is generated by alternately performing forward operation in which the inner inclined rotary body is rotated in the forward direction and reverse operation in which the inner inclined rotary body is rotated in a reverse direction opposite to the forward direction such that the operation amount of the forward operation is larger than the operation amount of the reverse operation (see step S36 in Fig. 9). Such rotation operation with vibration effectively resolves or suppresses adhesion etc. for medicine pieces remaining on the inner inclined rotary body 30 (see Fig. 13), adequately avoiding undesirable occurrence and continuous presence of medicine pieces remaining on the inner inclined rotary body 30.

Moreover, vibration of the inner inclined rotary body 30 is not just eliminated on the spot, but is transmitted to other members such as the outer rotary body 20 that contact the medicine pieces. Thus, it is possible to avoid or suppress undesirable occurrence and continuous presence of medicine pieces remaining on the outer rotary body 20 etc. as well.

After that, when the non-detection time interval t reaches the time interval t8 at which it is expected that adhesion etc. for remaining medicine pieces is sufficiently resolved and execution of the vibrating rotation control is finished, high-speed reverse operation in which the inner inclined rotary body 30 rotated in reverse at a high speed with the outer rotary body 20 continuously rotating in the forward direction is immediately started (see step S38 in Fig. 8). When the non-detection time interval t reaches the time interval t9, switching is made to high-speed forward operation in which the inner inclined rotary body 30 is rotated in the forward direction at a high speed (see step S40 in Fig. 9) . With such operation, medicine pieces remaining on the inner inclined rotary body 30, if any, are immediately moved to the medicine transfer path on the annular upper end surface 23 of the outer rotary body 20 to be fed into the fall-discharge port 14.

When the non-detection time interval t reaches the time interval (final prescribed time interval) t10 with no medicine pieces being discharged in spite of taking a variety of measures, it can be confirmed that the rotary containers (20, 30) have been emptied, and thus the control portion 80 stops rotations of the rotary bodies 20 and 30 (see step S42 in Fig. 9) and ends the medicine discharge process. After that, the device stands by for manual replenishment with medicine pieces etc.

### [Others]

While operation with use of an example of the operation mode stored in the operation mode storage portion 84E illustrated in Fig. 7B has been described with reference to Figs. 8 and 9, the present invention is not limited to use of the operation mode described above. For example, it is only necessary that the operation mode stored in the operation mode storage portion 84E should include operation to perform vibrating rotation control for rotating the inner inclined rotary body 30 while vibrating the inner inclined rotary body 30 before stopping the discharge operation, and operation performed before and after the vibrating rotation control is not limited to that in the above example. For example, the operation mode may be configured such that the medicine discharge operation control portion performs high-speed forward operation, in which the inner inclined rotary body is rotated in the forward direction at a speed (high speed) higher than a rotational speed of the previous forward operation, immediately after execution of the vibrating rotation control, and then performs high-speed reverse operation, in which the inner inclined rotary body is rotated in the forward direction at a speed higher than the rotational speed of the reverse operation, after the high-speed forward operation is performed.

While the vibrating rotation control is performed by alternately performing forward operation in which the inner inclined rotary body is rotated in the forward direction and reverse operation in which the inner inclined rotary body is rotated in a reverse direction opposite to the forward direction such that the operation amount of the forward operation is larger than the operation amount of the reverse operation in the operation mode according to the above embodiment, the inner inclined rotary body may be vibrated with the operation amount of the forward operation being substantially equal to the operation amount of the reverse operation.

The operation modes may include an operation mode in which the medicine discharge operation control portion performs reverse rotation control, in which the inner inclined rotary body is rotated in reverse, when the determination portion determines that the non-detection time interval has reached one or more prescribed time intervals determined in advance before the vibrating rotation control is executed.

While the lateral width of the medicine transfer path on the annular upper end surface 23 of the outer rotary body 20 is first increased and the inner inclined rotary body 30 is thereafter subjected to the vibrating rotation control in the above embodiment, the order of execution, the time of execution, etc. of switching of the rotational direction, changes in rotational speeds, etc. may be changed as appropriate in other methods related to rotation controls for the outer rotary body 20 and the inner inclined rotary body 30.

### INDUSTRIAL APPLICABILITY

The medicine feeder according to the present invention may be used to replace some or all of a large number of medicine feeders of a rotary alignment disk type mounted on a tablet dispensing apparatus. Also, it may be mounted on a tablet splitting device on which only one or a small number of medicine feeders are mounted, and further may be mounted on a tablet counter (medicine piece counter) etc. operable to count up the number of medicine pieces consecutively fed in a device operable to charge medicine pieces such as tablets into a medicine bottle.

### Description of Reference Numerals

5, 5a, 5b, 5c medicine piece
10 medicine feeder
11 peripheral wall
11a inner peripheral wall surface (inner wall surface of void of peripheral wall)
12 transfer surface guide
13 discharge guide
14 fall-discharge port
20 outer rotary body
21 lower portion
22 upper portion
23 annular upper end surface (medicine transfer path)
23a groove
23b engraving
23c chamfering
30 inner inclined rotary body
30a body
31 axial portion
32 center portion
33 peripheral edge portion
34 delivery portion
35 push-up portion
40 support mechanism
50 rotational drive mechanism
54a, 54b rotational drive motor
56 fallen medicine detecting means
60 tablet height regulation mechanism
60a elevating drive motor
61 support portion
62a, 62b, 62c acting portion (medicine abutment portion)
70 lateral width regulation mechanism
70a advancing drive motor
71 first regulation member
71a lower portion
71b upper portion
72 second regulation member
73 link mechanism
74 sample medicine placement site (dimension measurement mechanism)
80 control portion

## Claims

1. A medicine feeder comprising:
an outer rotary body including an internal space having an opening portion opening upward and an annular upper end surface surrounding the opening portion, the outer rotary body being rotatable about a virtual vertical line extending in a vertical direction in the internal space and operable to rotate in a forward direction during discharge operation;
an inner inclined rotary body disposed in the internal space of the outer rotary body, the inner inclined rotary body being rotatable about a virtual inclined line tilted with respect to the vertical line, with a plurality of solid medicine pieces being placed on an upper surface portion of the inner inclined rotary body, and operable to move the plurality of medicine pieces onto the annular upper end surface of the outer rotary body while rotating in a forward direction during the discharge operation;
an alignment regulation mechanism configured to align the plurality of medicine pieces, which have been moved onto the annular upper end surface of the outer rotary body, in a rotational direction of the annular upper end surface when the outer rotary body is rotating in the forward direction;
a control portion configured to perform rotation control of the outer rotary body and rotation control of the inner inclined rotary body; and
fallen medicine detecting means for detecting a fallen medicine piece that has been carried to a fall-discharge port by rotation of the outer rotary body in the forward direction, wherein:
the control portion includes a time interval measurement portion configured to measure a non-detection time interval for which no medicine pieces are detected on the basis of an output from the fallen medicine detecting means when the rotation controls are performed, and a medicine discharge operation control portion configured to stop the discharge operation by determining that no medicine pieces are contained any more when the non-detection time interval measured by the time interval measurement portion exceeds a final prescribed time interval determined in advance; and
the medicine discharge operation control portion is configured to perform vibrating rotation control for rotating the inner inclined rotary body while vibrating the inner inclined rotary body before stopping the discharge operation.

2. The medicine feeder according to claim 1, wherein
the vibration is generated in the vibrating rotation control by alternately performing forward operation in which the inner inclined rotary body is rotated in the forward direction and reverse operation in which the inner inclined rotary body is rotated in a reverse direction opposite to the forward direction.

3. The medicine feeder according to claim 2, wherein
an operation amount of the forward operation and an operation amount of the reverse operation are minute compared to an operation amount of the forward operation of the inner inclined rotary body performed before the vibrating rotation control is performed.

4. The medicine feeder according to claim 3, wherein
the operation amount of the forward operation is larger than the operation amount of the reverse operation in the vibrating rotation control.

5. The medicine feeder according to claim 2, wherein
the medicine discharge operation control portion performs high-speed reverse operation, in which the inner inclined rotary body is rotated in the reverse direction at a speed higher than a rotational speed of rotation of the inner inclined rotary body in the forward direction performed during the discharge operation, immediately after execution of the vibrating rotation control.

6. The medicine feeder according to claim 5, wherein
the medicine discharge operation control portion performs high-speed forward operation, in which the inner inclined rotary body is rotated in the forward direction at a speed higher than the rotational speed of the rotation of the inner inclined rotary body in the forward direction performed during the discharge operation, after the high-speed reverse operation is performed.

7. The medicine feeder according to claim 2, wherein:
the medicine discharge operation control portion includes
an outer drive portion that performs the rotation control of the outer rotary body,
an inner drive portion that performs the rotation control of the inner inclined rotary body,
a determination portion that determines whether or not the non-detection time interval has reached one or more prescribed time intervals determined in advance, and
a drive instruction generation portion configured to provide the outer drive portion and the inner drive portion with a drive instruction according to an operation mode selected from a plurality of operation modes determined in advance on the basis of a determination result outputted from the determination portion; and
the plurality of operation modes include an operation mode for performing the vibrating rotation control.

8. The medicine feeder according to claim 7, wherein
the plurality of operation modes include an operation mode for performing high-speed reverse operation, in which the inner inclined rotary body is rotated in the reverse direction at a speed higher than a rotational speed of rotation of the inner inclined rotary body in the forward direction performed during the discharge operation, immediately after execution of the vibrating rotation control, and performing high-speed forward operation, in which the inner inclined rotary body is rotated in the forward direction at a speed higher than the rotational speed of the rotation of the inner inclined rotary body in the forward direction performed during the discharge operation, after the high-speed reverse operation is performed.

9. The medicine feeder according to claim 7, wherein
the plurality of operation modes include an operation mode in which the medicine discharge operation control portion performs reverse operation, in which the inner inclined rotary body is rotated in reverse, when the determination portion determines that the non-detection time interval has reached one or more prescribed time intervals determined in advance before the vibrating rotation control is executed.

10. The medicine feeder according to claim 1, wherein:
the alignment regulation mechanism regulates a lateral width of a medicine transfer path formed on the annular upper end surface of the outer rotary body;
the medicine discharge operation control portion includes an increase-decrease instruction generation portion configured to output an increase-decrease instruction to increase and decrease an amount of regulation of the lateral width; and
the increase-decrease instruction generation portion outputs the increase-decrease instruction to gradually increase the lateral width to the alignment regulation mechanism when the non-detection time interval measured by the time interval measurement portion reaches a congestion time interval determined in advance and longer than a normal time interval before execution of the vibrating rotation control.

11. The medicine feeder according to claim 10, wherein
the increase-decrease instruction generation portion outputs, to the alignment regulation mechanism, the increase-decrease instruction to restore the lateral width to a dimension before being increased when the fallen medicine detecting means detects a fallen medicine piece after the lateral width is increased by driving the alignment regulation mechanism.

12. The medicine feeder according to claim 10, wherein
the increase-decrease instruction generation portion outputs the increase-decrease instruction to increase the lateral width stepwise.
